**Europäisches Patentamt**

**European Patent Office**

**Office européen des brevets**

(19)

(11) Veröffentlichungsnummer: **0 408 892 A1**

# (12) EUROPÄISCHE PATENTANMELDUNG

(21) Anmeldenummer: **90111139.3**

(22) Anmeldetag: **13.06.90**

(51) Int. Cl.5: **H04N 5/50**

Die Bezeichnung der Erfindung wurde geändert (Richtlinien für die Prüfung im EPA, A-III, 7.3).

(30) Priorität: **03.07.89 DE 3921847**

(43) Veröffentlichungstag der Anmeldung:
**23.01.91 Patentblatt 91/04**

(84) Benannte Vertragsstaaten:
**AT DE FR IT**

(71) Anmelder: **GRUNDIG E.M.V.**
**Elektro-Mechanische Versuchsanstalt Max Grundig holländ. Stiftung & Co. KG.KG.**
**Kurgartenstrasse 37**
**D-8510 Fürth/Bay.(DE)**

(72) Erfinder: **Heider, Peter, Dipl.-Ing.(FH) Grundig E.M.V.**
**holländ. Stiftung & Co KG Kurgartenstrasse 37 37**
**D-8510 Fürth/Bay.(DE)**

(54) **Einrichtung zur Programmwahl mittels einer teletextseitenähnlichen Tabelle.**

(57)

1. Einrichtung zur Programmwahl mittels einer Teletexttabelle.

2.1. Bei der Auswahl eines Fernsehprogramms ist es bei Empfangsanlagen, die eine Vielzahl von Sendern empfangen können, für den Benutzer oft schwierig sich die Übersicht zu bewahren, welcher Programmplatz welchen Sender empfängt. Um eine Übersicht zu gewinnen, können Tabellen im Teletextformat erstellt werden, die jedoch nur Informationen enthalten. Um die Bedienung komfortabler zu machen, soll bei der neuen Einrichtung die Programmwahl aus der Tabelle möglich sein.

2.2. Dies wird im wesentlichen dadurch erreicht, daß die in einer Tabelle enthaltenen Informationen so codiert werden, daß mit einem Mikrocomputer daraus Adressen erzeugt werden können, die Speicherplätze ansteuern, welche Daten zur Empfängerabstimmung enthalten oder, daß mit dem Mikrocomputer direkt aus den in der Tabelle enthaltenen Informationen Abstimmdaten erzeugt werden.

2.3. Teletextdecoder, Videogeräte mit Teletextdecoder

EP 0 408 892 A1

## EINRICHTUNG ZUR PROGRAMMWAHL MITTELS EINER TELETEXTTABELLE

Die vorliegende Erfindung betrifft eine Einrichtung zum Decodieren und Aufbereiten von in Austastlükken übertragenen Teletextsignalen, welche in Form von stehenden Bildern als Teletextseiten auf dem Bildschirm dargestellt werden und die Mittel zur Bedienung, Speicherung und Verarbeitung dieser Teletextsignale und zusätzliche Speichermittel zum Ablegen von selbsterzeugten Tabellen im Teletextformat enthält.

Eine solche Einrichtung ist aus der deutschen Offenlegungsschrift DE-OS 36 23 924 der Anmelderin bekannt.

In dieser Offenlegungsschrift wird unter anderem auch die Benutzung eines zusätzlichen Speichers in einem Teletextdecoder zum Abspeichern einer Sendertabelle offenbart, wobei hier zu den Programmnummern eine Senderkennung angegeben wird. Auf diese Weise kann sich der Benutzer eine Programmtabelle erstellen, die ihm eine Übersicht gibt, welche Fernseh/Satelliten-Programme auf den jeweiligen Programmplätzen empfangen werden. Eine solche Einrichtung ist besonders dann sinnvoll, wenn sehr viele Programme empfangen werden können und somit der Benutzer keine Übersicht mehr hat, welcher Programmplatz mit welchem Sender belegt ist.

Nachteil dieser Anordnung ist, daß man zum Programmwechsel zunächst in dem Teletextmodus und nach Auswahl des gewünschten Senders wieder in Fernsehmodus gehen muß, um dann durch die Eingabe des Programmplatzes über die Bedieneinheit auf den gewünschten Sender zu schalten. Aufgabe der Erfindung ist es deshalb, den Bedienkomfort der bekannten Einrichtung zu erhöhen.

Diese Aufgabe wird erfindungsgemäß dadurch gelöst, daß die vom Benutzer eingebbare Tabelle den Programmplatz, den Kanal und den Sendernamen bzw. eine Abkürzung davon angibt, wobei jedem Programmplatz eine Adresse in einem nichtflüchtigen Speicher zugeordnet ist und dieser Speicher Daten enthält, die zur Einstellung eines Senders nötigt sind. Die Auswahl eines Programmplatzes erfolgt hierbei mittels Cursor-Steuerung und einer Bestätigungstaste.

Diese Erfindung ermöglicht es, daß die Programmwahl bzw. der Programmwechsel direkt aus der Tabelle vorgenommen werden kann. Zur Eingabe der Tabelle wird zunächst über die Bedieneinheit die Tafel mit der Programmübersicht aufgerufen. Diese kann aus einer Spalte mit Programmnummern bestehen, die bereits vom Hersteller bereitgestellt werden kann. Ein Cursor liegt zunächst auf der ersten Zeile, d.h. auf Programmplatz 1. Dieser Cursor wird mit Steuertasten auf der Bedieneinheit an die gewünschte Stelle geschoben, in diesem Fall rechts neben die Programmplatznummer und es wird z.B. mittels rollender Zeichenfolge eine Kanalnummer eingegeben, die aus mehreren Stellen besteht, wobei die Stellen der Reihe nach eingegeben werden und der Cursor nach bestätigen einer Stelle zur nächsten springt. Nach Eingabe der Kanalnummer erfolgt die Eingabe einer Senderkennung in der gleichen Weise. Nach Abschluß einer Zeile, also eines Programmplatzes geht der Cursor in die nächste Zeile. Der Benutzer ist jedoch nicht an die vorgegebene Reihenfolge gebunden, sondern kann den Cursor steuern, so daß er den Ablauf der Eingabe oder einer Änderung selbst bestimmt.

Eine fertige Tabelle kann z.B. so aussehen:

```
01    C 04  ARD
02    C 38  ZDF
03    S 36  SAT1

      .

      .

      .

      .

      .

19    C 02  ORF

      .

      .

      .
```

(Programmplatz   Kanal   Kennung)

Bei einem Programmwechsel wird zunächst die Programmübersicht aufgerufen, die unter Umständen aus mehreren aufeinanderfolgenden Seiten besteht. Danach wird der Cursor auf die gewünschte Zeile bzw. auf den gewünschten Programmplatz bewegt und die Wahl mit einer Bestätigungstaste ausgeführt. Dazu wird vom Mikroprozessor der Decodereinheit die Programmplatznummer ermittelt, auf welcher der Cursor steht. Daraus wird anschließend die Adresse ermittelt, unter welcher die Abstimmdaten abgespeichert sind, wobei hier die Abstimmdaten angesprochen sind, welche in der herkömmlichen Art und Weise eingespeichert werden.

Eine vorteilhafte Weiterbildung dieser Erfindung ergibt sich, wenn man diese Einrichtung nicht nur zur Programmumschaltung verwendet, sondern sie so aufbaut, daß auch die Abstimmdaten direkt erzeugt werden. Um dies zu erreichen, werden die Kanalnummern mit Hilfe des Mikroprozessors verarbeitet und so aufbereitet, daß damit direkt der PLL-Abstimmkreis auf die gewünschte Frequenz abgestimmt wird.

Weitere vorteilhafte Ausgestaltungen ergeben sich, wenn die Tabelle weitere Einstelldaten enthält, wie z.B. Positionseinstelldaten für eine Satellitenantenne bei Satellitenprogrammen. In diesem Fall werden die Einstelldaten im Mikrocomputer aufbereitet und damit ein Motor angesteuert, der die Satellitenantenne in die dem angewählten Satellitenprogramm entsprechende Position bringt.

**Ansprüche**

1.Einrichtung zum Decodieren und Aufbereiten von in den Austastlücken eines Fernsehsignals übertragenen Teletextsignalen, welche in Form von stehenden Bildern als Teletextseiten auf dem Bildschirm dargestellt werden und welche eine Bedieneinheit, Mittel zur Speicherung und Verarbeitung dieser Teletextsignale und zusätzliche Speichermittel zum Ablegen einer selbst erzeugten Tabelle im Teletextformat enthält, **dadurch gekennzeichnet, daß**
- die selbsterzeugte Tabelle eine Programmplatztabelle ist, die den Programmplatz, den Kanal und den Sendernamen enthält,
- die einzelnen Programmplätze durch Cursorsteuerung angewählt werden können,
- der angewählte Programmplatz durch eine Tastenbetätigung bestätigt wird,
- in einem Mikrocomputer aus der Programmplatznummer des angewählten Programmplatzes eine Adresse errechnet wird, unter welcher Einstelldaten für das Programm abgespeichert sind, und
- mit Hilfe dieser Daten ein Abstimmschaltung angesteuert wird, die den Empfänger auf das gewählte Programm einstellt.
2. Einrichtung zum Decodieren und Aufbereiten von in den Austastlücken eines Fernsehsignals übertragenen Teletextsignalen, welche in Form von stehenden Bildern als Teletextseiten auf dem Bildschirm dargestellt werden und welche eine Bedieneinheit, Mittel zur Speicherung und Verarbeitung dieser Teletextsignale und zusätzliche Speichermittel zum Ablegen einer selbst erzeugten Tabelle im Teletextformat

3

EP 0 408 892 A1

enthält, **dadurch gekennzeichnet**, daß

- die selbsterzeugte Tabelle eine Programmplatztabelle ist, die den Programmplatz, den Kanal und den Sendernamen enthält,
- die einzelnen Programmplätze durch Cursorsteuerung angewählt werden können,
- der angewählte Programmplatz durch eine Tastenbetätigung bestätigt wird,
- die Einstelldaten aus den in der Tabelle enthaltenen Daten, insbesondere aus der Kanalnummer durch den Mikroprozessor errechnet werden, und
- mit Hilfe dieser Daten ein Abstimmschaltung angesteuert wird, die den Empfänger auf das gewählte Programm einstellt.

3. Einrichtung nach Anspruch 1 oder 2, **dadurch gekennzeichnet**, daß die Tabelle auch Daten enthält, die zur Steuerung einer Satellitenantenne in die für den Empfang eines gewählten Satellitenprogramms richtige Position verwendet werden.

4

**Europäisches Patentamt**

**EUROPÄISCHER RECHERCHENBERICHT**

Nummer der Anmeldung

**EP 90 11 1139**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | EP-A-0 253 110 (GRUNDIG E.M.V.) <br> * Seite 1, Zeile 26 - Seite 2, Zei& DE-A-3623924 * <br> – – – | 1-3 | H 04 N 5/50 |
| A | DE-A-3 335 082 (TELEFUNKEN FERNSEH UND RUND-FUNK GMBH) <br> * Seite 4, Zeile 19 - Seite 6, Zeile 16; Figur 1 * <br> – – – – – | 1,2 | |

| | | | RECHERCHIERTE SACHGEBIETE (Int. Cl.5) |
|---|---|---|---|
| | | | H 04 N 5/00 <br> H 04 N 7/00 |

Der vorliegende Recherchenbericht wurde für alle Patentansprüche erstellt

| Recherchenort | Abschlußdatum der Recherche | Prüfer |
|---|---|---|
| Den Haag | 08 November 90 | DUDLEY C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
     
& : Mitglied der gleichen Patentfamilie, übereinstimmendes Dokument